# EUROPÄISCHE PATENTANMELDUNG

(11) **EP 3 726 139 A1**
(43) Veröffentlichungstag der Anmeldung: **21.10.2020**
(21) Anmeldenummer: 19169491.8
(22) Anmeldetag: 16.04.2019
(51) Int. Cl.: F23N 5/00, F02D 41/24

(54) **VERFAHREN UND ANORDNUNG ZUM STEUERN EINER VERBRENNUNGSKRAFTMASCHINE MIT MEHREREN BRENNERN**

(71) Anmelder: Siemens Aktiengesellschaft, 80333 München (DE)
(72) Erfinder: Brummel, Hans-Gerd, 13465 Berlin (DE); Pfeifer, Uwe, 12557 Berlin (DE); Sterzing, Volkmar, 85579 Neubiberg (DE)

(57) **Zusammenfassung**

Erfindungsgemäß werden für einen jeweiligen Brenner (BN1, BN2) Verbrennungsmessdaten (VD1, VD2) brennerspezifisch erfasst und einer den jeweiligen Brenner (BN1, BN2) identifizierenden Brennerkennung (BK1, BK2) zugeordnet. Weiterhin werden Performanzmessdaten (PD) der Verbrennungskraftmaschine (GT) erfasst, anhand derer ein Performanzwert ermittelt wird. Mittels der Verbrennungsmessdaten (VD1, VD2), der zugeordneten Brennerkennungen (BK1, BK2) sowie der Performanzmessdaten (PD) wird ein maschinelles Lernmodell (NN) darauf trainiert, brennerspezifische Steuerdaten (SD1, SD2) zu generieren, die bei brennerspezifischer Ansteuerung der Brenner (BN1, BN2) durch die Steuerdaten (SD1, SD2) den Performanzwert optimieren. Die vom trainierten maschinellen Lernmodell (NN) generierten Steuerdaten (SD1, SD2) werden zum brennerspezifischen Ansteuern der Brenner (BN1, BN2) ausgegeben.

## Beschreibung

Moderne Verbrennungskraftmaschinen, wie beispielsweise Gasturbinen, Strahltriebwerke oder Verbrennungsmotoren verfügen häufig über mehrere Brenner, die in separaten oder in gemeinsamen Brennkammern hohe Temperaturen und Volumenströme erzeugen, die in Bewegungsenergie umgesetzt werden. Während des Verbrennungsvorgangs werden in der Regel Druckschwingungen angeregt und Schadstoffe, wie z.B. Stickoxide, Kohlenmonoxid oder unverbrannte Kohlenwasserstoffe erzeugt oder ausgestoßen.

Bei vielen Verbrennungskraftmaschinen wird der Verbrennungsvorgang in den Brennern durch eine Justierung verschiedener Brennstoffstufen strukturiert. Hierbei werden einem jeweiligen Brenner in den unterschiedlichen Brennstoffstufen differenzierte Brennstoffflüsse mit unterschiedlichen Flussmengen, Einleitungsdrücken und/oder Brennstoff-Luft-Mischungsverhältnissen parallel zugeführt. Für jede Brennstoffstufe ist üblicherweise eine separate Ringleitung vorgesehen, die zu allen Brennern führt. Durch geeignete Justierung der einzelnen Brennstoffstufen kann der Betrieb der Verbrennungskraftmaschine optimiert werden. Dabei wird häufig angestrebt, Druckschwankungen oder Temperaturspitzen in den Brennkammern, ein Zusetzen von Brennstoffdüsen und/oder einen Schadstoffausstoß zu verringern sowie eine Leistung oder einen Wirkungsgrad der Verbrennungskraftmaschine zu steigern. Die angestrebten Optimierungsziele wirken jedoch häufig antagonistisch und können nur näherungsweise erreicht werden.

Es ist Aufgabe der vorliegenden Erfindung, ein Verfahren und eine Anordnung zum Steuern einer Verbrennungskraftmaschine mit mehreren Brennern zu schaffen, die eine bessere Optimierung des Betriebs der Verbrennungskraftmaschine erlauben.

Gelöst wird diese Aufgabe durch ein Verfahren mit den Merkmalen des Patentanspruchs 1, durch eine Anordnung mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15.

Erfindungsgemäß werden zum Steuern einer Verbrennungskraftmaschine mit mehreren Brennern für einen jeweiligen Brenner Verbrennungsmessdaten brennerspezifisch erfasst und einer den jeweiligen Brenner identifizierenden Brennerkennung zugeordnet. Die Verbrennungskraftmaschine kann insbesondere eine Gasturbine, ein Strahltriebwerk oder ein Verbrennungsmotor sein. Ein jeweiliger Brenner kann dabei auch mehrere Brennstellen aufweisen und/oder als Brennergruppe ausgestaltet sein. Weiterhin werden Performanzmessdaten der Verbrennungskraftmaschine erfasst, anhand derer ein Performanzwert ermittelt wird. Mittels der Verbrennungsmessdaten, der zugeordneten Brennerkennungen sowie der Performanzmessdaten wird ein maschinelles Lernmodell darauf trainiert, brennerspezifische Steuerdaten zu generieren, die bei brennerspezifischer Ansteuerung der Brenner durch die Steuerdaten den Performanzwert optimieren. Unter einem Optimieren sei hierbei insbesondere auch ein Annähern an ein durch ein vorgegebenes Kriterium bestimmtes Optimum verstanden. Ein solches Kriterium kann in einer sogenannten Belohnungsfunktion, Verlustfunktion oder Kostenfunktion für den Performanzwert ausgewertet werden. Die vom trainierten maschinellen Lernmodell generierten Steuerdaten werden zum brennerspezifischen Ansteuern der Brenner ausgegeben.

Als Verbrennungsmessdaten können insbesondere Druckschwankungen in einer Brennkammer, Schadstoffemissionen, eine Gastemperatur, eine räumliche Temperaturverteilung, ein Brennstoffzufluss, ein Mischungsverhältnis oder andere Parameter eines Verbrennungsvorgangs brennerspezifisch erfasst werden. Der Performanzwert kann insbesondere eine generierte Leistung oder einen Wirkungsgrad der Verbrennungskraftmaschine, Druckschwankungen in einer Brennkammer, eine Temperaturverteilung, eine Gaseinlasstemperatur, lokale Temperaturspitzen, Schadstoffemissionen, ein Zusetzen von Brennstoffdüsen, einen Brennstoffverbrauch oder einen Verschleiß der Verbrennungskraftmaschine betreffen. Durch die Steuerdaten können insbesondere ein Mischungsverhältnis zwischen Brennstoff und Luft, ein Brennstoffzufluss oder ein Einspritzdruck brennerspezifisch gesteuert werden.

Zum Ausführen des erfindungsgemäßen Verfahrens sind eine Anordnung zum Steuern einer Verbrennungskraftmaschine, ein Computerprogrammprodukt sowie ein computerlesbares Speichermedium vorgesehen.

Das erfindungsgemäße Verfahren und die erfindungsgemäße Anordnung können beispielsweise mittels eines oder mehrerer Prozessoren, Computer, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden.

Ein Vorteil der Erfindung ist insbesondere darin zu sehen, dass durch die brennerspezifische Messdatenerfassung und die Performanzoptimierung individuelle Unterschiede der einzelnen Brenner, die durch Fertigungstoleranzen oder unterschiedliche Leitungsführungen bedingt sein können, in koordinierter Weise ausgeglichen werden können. Auf diese Weise können in vielen Fällen Temperatur-, Druck- oder Schadstoffextreme, eine Materialermüdung, ein Verschleiß oder ein Schadstoffausstoß verringert und/oder ein Wirkungsgrad oder eine generierte Leistung erhöht werden. Durch die Verwendung eines maschinellen Lernmodells können auch komplexe Wirkungszusammenhänge oder Korrelationen zwischen brennerspezifischen Verbrennungsmessdaten, Performanzmessdaten und brennerspezifisch optimierten Steuerdaten verhältnismäßig genau modelliert werden. Dies gilt insbesondere auch für unterschiedliche Betriebszustände der Verbrennungskraftmaschine.

Vorteilhafte Ausführungsformen und Weiterbildungen der Erfindung sind in den abhängigen Ansprüchen angegeben.

Gemäß einer vorteilhaften Ausführungsform der Erfindung kann ein Brennstoffzufluss zu einem jeweiligen Brenner abhängig von den Steuerdaten brennerspezifisch auf mehrere Brennstoffstufen aufgeteilt werden. Mittels der verschiedenen Brennstoffstufen können einem Brenner jeweils mehrere Brennstoffflüsse zugeleitet werden, die sich hinsichtlich ihres Brennstoff/Luft-Mischungsverhältnisses, ihres Einleitungsdruckes oder hinsichtlich eines anderen Einleitungsparameters unterscheiden. Auf diese Weise kann in jedem Brenner der Verbrennungsvorgang räumlich, zeitlich, physikalisch und/oder chemisch strukturiert und damit insbesondere hinsichtlich des Performanzwertes brennerspezifisch optimiert werden.

Vorzugsweise kann die Aufteilung des Brennstoffzuflusses auf die Brennstoffstufen durch brennerspezifische und/oder brennstoffstufenspezifische Mehrwegventile vorgenommen werden. Durch die Verwendung von Mehrwegventilen kann ein Verrohrungsaufwand für die Verbrennungskraftmaschine häufig erheblich gesenkt werden.

Vorteilhafterweise kann zur kurzfristigen Unterbrechung oder Reduzierung eines Brennstoffzuflusses ein brennerübergreifendes Ventil angesteuert werden. Auf diese Weise können mehrere Brenner - unabhängig von ihrer brennerspezifischen Ansteuerung - gemeinsam schnell heruntergeregelt werden.

Nach einer vorteilhaften Weiterbildung der Erfindung können Verbrennungsmessdaten brennstoffstufenspezifisch erfasst und jeweils einer Brennstoffstufenkennung zugeordnet werden, die zusätzlich zum Trainieren des maschinellen Lernmodells verwendet wird. Auf diese Weise können durch das maschinelle Lernmodell auch brennstoffstufenspezifische Wirkungszusammenhänge zwischen Verbrennungsmessdaten und Performanzmessdaten bzw. Steuerdaten modelliert werden. Diese Wirkungszusammenhänge können bei der Optimierung des Performanzwertes in vorteilhafter Weise berücksichtigt werden.

Gemäß einer besonders vorteilhaften Ausführungsform der Erfindung kann das maschinelle Lernmodell durch ein Verfahren des bestärkenden Lernens trainiert werden. Ein solches Verfahren des bestärkenden Lernens wird häufig auch als Reinforcement-Learning bezeichnet. Als Verfahren des bestärkenden Lernens können beispielsweise sogenannte PGNRR-Verfahren (PGNRR: Policy Gradient Neural Rewards Regression), VOP-PGNNR-Verfahren (VOP-PGNRR: Variable Objective Policy PGNRR) oder modellbasierte Reinforcement-Learning-Verfahren wie z.B. RCNN-Verfahren (RCNN: Recurrent Control Neural Network) verwendet werden. Durch das Training können insbesondere eine oder mehrere sogenannte geschlossene Control-Policies generiert werden. Derartige geschlossene Control-Policies lassen sich in der Regel sehr schnell ausführen und erlauben mithin eine hohe Zeitauflösung bei der Steuerung der Verbrennungskraftmaschine.

Das maschinelle Lernmodell und/oder eine Control-Policiy kann vorzugsweise ein künstliches neuronales Netz, ein rekurrentes neuronales Netz, ein faltendes neuronales Netz, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfassen.

Nach einer weiteren vorteilhaften Ausführungsform der Erfindung kann das maschinelle Lernmodell im laufenden Betrieb der Verbrennungskraftmaschine anhand aktuell erfasster Verbrennungsmessdaten und Performanzmessdaten weitertrainiert werden. Dies erlaubt eine fortlaufende Betriebsoptimierung und Anpassung an laufzeitbedingte oder umgebungsbedingte Veränderungen der Verbrennungskraftmaschine.

Weiterhin kann das maschinelle Lernmodell in einer Kalibrierungsphase mittels einer Trainings-Verbrennungskraftmaschine und/oder mittels eines Simulationsmodells einer Verbrennungskraftmaschine vortrainiert werden. Ein solches Simulationsmodell wird häufig auch als Designmodell oder Digital-Twin bezeichnet. Als Trainings-Verbrennungskraftmaschine kann vorzugsweise ein baugleiches oder ähnliches Modell der Verbrennungskraftmaschine verwendet werden. Durch ein solches Vortraining kann ein Training an der Verbrennungskraftmaschine häufig erheblich verkürzt werden.

Vorteilhafterweise kann das maschinelle Lernmodell mehrere, für einen jeweiligen Brenner spezifische Teilmodelle umfassen, die jeweils für den jeweiligen Brenner spezifische Steuerdaten generieren. Auf diese Weise kann die Trainingsaufgabe in kleinere Teilaufgaben zerlegt werden, deren Wirkungszusammenhänge in der Regel einfacher zu modellieren sind und die sich oft erheblich schneller ausführen lassen.

Insbesondere können die Teilmodelle zur Generierung der brennerspezifischen Steuerdaten parallel ausgeführt werden. Auf diese Weise kann eine Ausführungszeit in der Regel erheblich verkürzt werden.

Nach einer vorteilhaften Weiterbildung der Erfindung kann ein weiteres maschinelles Lernmodell darauf trainiert werden, weitere Steuerdaten zu generieren, durch die eine Brennstoffflussverteilung, insbesondere eine Gesamt-Brennstoffflussverteilung zwischen den Brennern und/oder eine Verbrennungstemperatur eingestellt wird und die den Performanzwert und/oder einen weiteren Performanzwert optimieren. Als Trainingsdaten können Verbrennungsmessdaten, zugeordnete Brennerkennungen sowie Performanzmessdaten genutzt werden. Darüber hinaus können zum Training des Weiteren maschinellen Lernmodells Simulationsdaten aus einer Simulation der Verbrennungskraftmaschine oder eines Teils davon verwendet werden. Die Verwendung von Simulationsdaten ist insofern vorteilhaft, als für derartige brennerübergreifende Steuerungsvorgänge in der Regel eine geringere Menge von geeigneten Trainingsdaten verfügbar sind. Die Einstellung der Brennstoffflussverteilung zwischen den Brennern ist insbesondere für Ringbrennkammern vorteilhaft, in denen die Brenner in einer gemeinsamen ringförmigen Brennkammer angeordnet sind. Da jeder Brenner in der Regel die ganze Ringbrennkammer beeinflusst, können durch eine Steuerung der brennerübergreifenden Brennstoffverteilung brennerübergreifende Schwankungen ausgeglichen werden.

Ein Ausführungsbeispiel der Erfindung wird nachfolgend anhand der Zeichnung näher erläutert. Dabei zeigen jeweils in schematischer Darstellung:
- Figur 1: eine Gasturbine mit mehreren Brennern,
- Figur 2: ein Diagramm zur Veranschaulichung einer Brennstoffzuführung bei einer Gasturbine gemäß dem Stand der Technik,
- Figur 3: ein Diagramm zur Veranschaulichung einer Brennstoffzuführung bei einer erfindungsgemäßen Gasturbine, und
- Figur 4: eine Anordnung zum Steuern der erfindungsgemäßen Gasturbine.

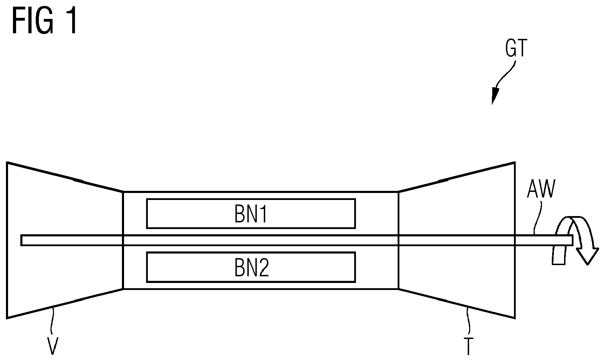

Figur 1 zeigt als Verbrennungskraftmaschine eine Gasturbine GT in schematischer Darstellung. Die Gasturbine GT verfügt über einen Verdichter V zum Komprimieren von zuströmender Luft, über mehrere Brenner BN1 und BN2 zum Verbrennen von zugeführtem Brennstoff sowie über eine Turbine T zum Umsetzen von durch die Verbrennung erzeugter thermischer und kinetischer Energie in Rotationsenergie. Letztere wird über eine Antriebswelle AW unter anderem zum Verdichter V übertragen, um diesen anzutreiben.

Die Anwendung der Erfindung auf eine Gasturbine ist lediglich beispielhaft zu verstehen. Alternativ oder zusätzlich kann die Erfindung auch zum Steuern von anderen Verbrennungskraftmaschinen, wie beispielsweise Strahltriebwerken oder Verbrennungsmotoren eingesetzt werden.

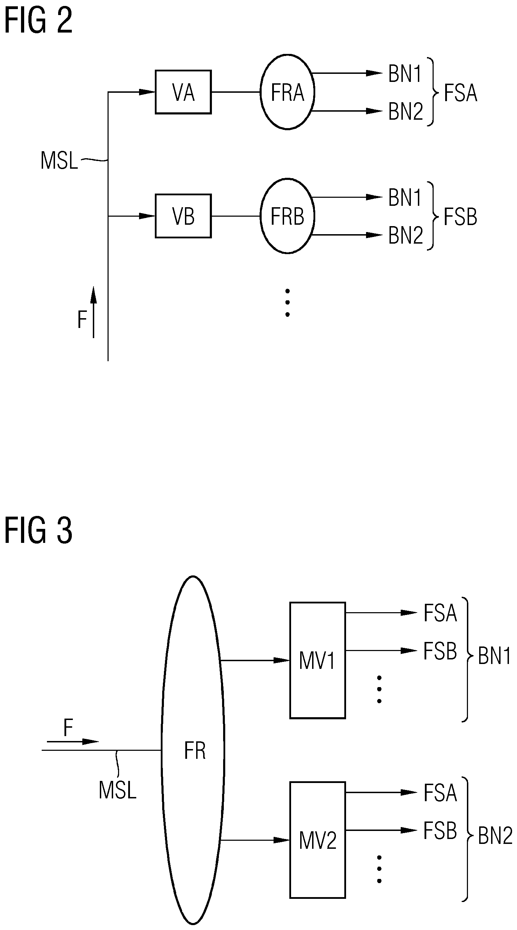

Figur 2 zeigt ein Diagramm zur Veranschaulichung einer Brennstoffzuführung bei einer Gasturbine gemäß dem Stand der Technik. Die Gasturbine verfügt über mehrere Brenner, von denen in Figur 2 aus Übersichtlichkeitsgründen nur zwei Brenner BN1 und BN2 veranschaulicht sind. Die Gasturbine verfügt weiterhin über mehrere Brennstoffstufen, von denen in Figur 2 ebenfalls aus Übersichtlichkeitsgründen nur zwei Brennstoffstufen FSA und FSB explizit angedeutet sind. In den unterschiedlichen Brennstoffstufen FSA und FSB werden in einen jeweiligen Brenner BN1 bzw. BN2 jeweils mehrere unterschiedliche Brennstoffflüsse durch separate Brennstoffdüsen eingeleitet. Die Brennstoffflüsse können sich z.B. hinsichtlich ihrer Flussmengen, Brennstoff-Luft-Mischungsverhältnissen oder Einleitungsdrücken unterscheiden. Auf diese Weise kann in jedem Brenner BN1 bzw. BN2 der Verbrennungsvorgang räumlich, zeitlich, physikalisch und/oder chemisch strukturiert und damit insbesondere optimiert werden.

Für die Brennstufen FSA und FSB ist gemäß dem Stand der Technik jeweils eine separate, stufenspezifische Ringleitung FRA bzw. FRB vorgesehen, die jeweils zu allen Brennern BN1 und BN2 führt. Die Ringleitungen FRA und FRB sind jeweils über ein steuerbares, brennstoffstufenspezifisches Ventil VA bzw. VB an eine Hauptversorgungsleitung MSL der Gasturbine angeschlossen. Die Ventile VA und VB teilen einen Gesamt-Brennstofffluss F auf die einzelnen Brennstoffstufen FSA und FSB auf.

Wegen der Zuführung einer jeweiligen Brennstoffstufe FSA bzw. FSB über eine Ringleitung FRA bzw. FRB wirkt sich die Aufteilung der Brennstoffzuflüsse undifferenziert auf alle Brenner BN1 und BN2 aus. Aufgrund von geometrischen Unterschieden der Leitungsführung sowie aufgrund von Fertigungstoleranzen oder laufzeitbedingten Änderungen der Brenner BN1 und BN2 unterscheiden sich jedoch die Brennstoffzuflüsse zu den einzelnen Brennern BN1 und BN2 sowie die individuellen Verbrennungsvorgänge zumindest geringfügig. Diese Unterschiede bedingen in der Regel auch unterschiedliche Schadstoffemissionen, Temperaturspitzen oder Druckschwankungen in den individuellen Brennern BN1 und BN2 und können durch die den Ringleitungen FRA und FRB vorgelagerten Ventile VA und VB nicht ausgeglichen werden. Dementsprechend orientiert sich eine Steuerung einer Verbrennungskraftmaschine gemäß dem Stand der Technik häufig am Brenner mit den schlechtesten Verbrennungswerten. Hierdurch werden jedoch die anderen Brenner nicht in optimaler Weise betrieben.

Figur 3 zeigt ein Diagramm zur Veranschaulichung einer Brennstoffzuführung bei einer erfindungsgemäßen Gasturbine. Die erfindungsgemäße Gasturbine verfügt über mehrere Brenner, von denen aus Übersichtlichkeitsgründen nur zwei Brenner BN1 und BN2 explizit dargestellt sind. Ein jeweiliger Brenner BN1 bzw. BN2 kann hierbei auch mehrere Brennstellen aufweisen und/oder als Brennergruppe ausgestaltet sein. Weiterhin weist die erfindungsgemäße Gasturbine mehrere Brennstoffstufen auf, von denen in Figur 3 ebenfalls aus Übersichtlichkeitsgründen nur zwei Brennstoffstufen FSA und FSB explizit angedeutet sind. Die Brennstoffstufen FSA und FSB dienen, wie oben bereits beschrieben, zur Aufteilung der Brennstoffzuflüsse zu den einzelnen Brennern BN1 und BN2. Im Unterschied zu der im Zusammenhang mit Figur 2 beschriebenen Gasturbine gemäß dem Stand der Technik erfolgt diese Aufteilung bei der erfindungsgemäßen Gasturbine jedoch für jeden Brenner BN1 und BN2 oder jede Brennergruppe individuell.

Zur brennerspezifischen Aufteilung der Brennstoffzuflüsse auf die einzelnen Brennstoffstufen FSA und FSB sind steuerbare, brennerspezifische Mehrwegventile MV1 und MV2 vorgesehen. Jedem Brenner BN1 und BN2 ist also ein Mehrwegventil MV1 bzw. MV2 spezifisch zugeordnet. Die Mehrwegventile MV1 und MV2 sind über eine stufenübergreifende Ringleitung FR an eine Hauptversorgungsleitung MSL der Gasturbine angeschlossen, über die ein Gesamt-Brennstofffluss F den Mehrwegventilen MV1 und MV2 zugeleitet wird.

Vorzugsweise können den Mehrwegventilen MV1 und MV2 brennerübergreifende Ventile (nicht dargestellt) zur kurzfristen Unterbrechung oder Reduzierung eines Brennstoffzuflusses vorgeschaltet sein. Derartige Unterbrechungen des Brennstoffzuflusses werden häufig auch als Trips und derartige Reduzierungen des Brennstoffzuflusses häufig als Unloads bezeichnet.

Durch die brennerspezifische Aufteilung des Brennstoffflusses auf die einzelnen Brennstoffstufen FSA und FSB können brennerindividuelle Unterschiede des Verbrennungsprozesses ausgeglichen und zudem brennerspezifisch optimiert werden. Insbesondere können Schadstoffemissionen, lokale Temperaturspitzen, Druckschwankungen, Leistung, Wirkungsgrad, Brennstoffverbrauch, Lebensdauer, Verschleiß, Ermüdung und/oder ein Zusetzen der Brennstoffdüsen individuell für jeden Brenner optimiert werden. Durch den möglichen Wegfall von stufenspezifischen Ringleitungen kann zudem in vielen Fällen ein Verrohrungsaufwand reduziert werden.

Darüber hinaus können einzelne Brenner BN1 bzw. BN2 gezielt an unterschiedlichen Leistungspunkten, bei unterschiedlichen Verbrennungstemperaturen und/oder mit unterschiedlichen Brennstoffmengen betrieben werden. Damit kann in der Regel eine Entstehung von Kohlenmonoxid, insbesondere bei kleiner Last und/oder von Stickoxiden effektiv reduziert werden. Damit können Gasturbinen in vielen Fällen unter Einhaltung von Emissionsvorschriften bei sehr niedriger Leistung betrieben und in Bereitschaft gehalten werden.

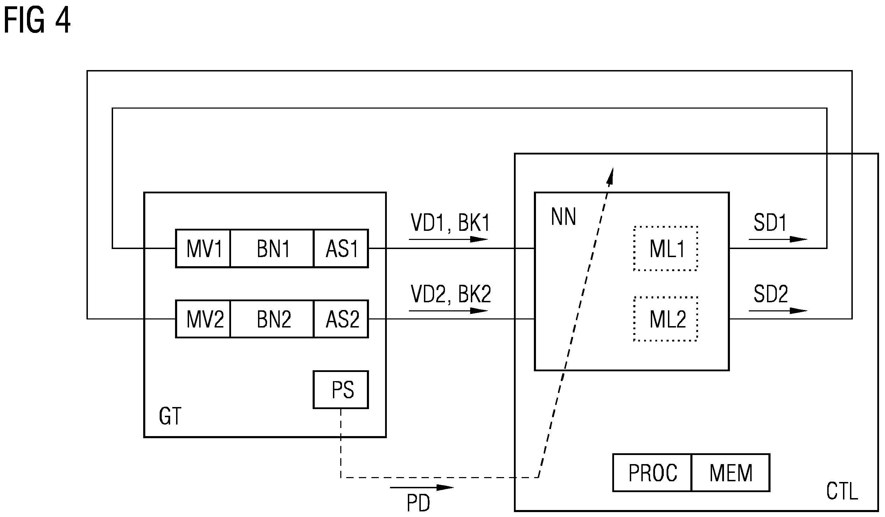

Figur 4 zeigt in schematischer Darstellung eine Anordnung zum Steuern einer erfindungsgemäßen Gasturbine GT. Insofern in Figur 4 die gleichen Bezugszeichen wie in Figur 3 verwendet werden, werden durch diese Bezugszeichen die gleichen Entitäten wie in Figur 3 bezeichnet. Diese Entitäten können insbesondere wie in Figur 3 beschrieben ausgestaltet sein.

Die Gasturbine GT verfügt über eine Turbinensteuerung CTL, die ein erfindungsgemäßes Steuerverfahren implementiert. Die Turbinensteuerung CTL ist in Figur 4 extern zur Gasturbine GT dargestellt. Alternativ kann die Turbinensteuerung CTL auch ganz oder teilweise in der Gasturbine GT implementiert sein. Die Turbinensteuerung weist einen oder mehrere Computer oder Prozessoren PROC zum Ausführen von Verfahrensschritten der Turbinensteuerung CTL auf, sowie eine oder mehrere Speicher MEN zum Speichern der von der Turbinensteuerung CTL zu verarbeitenden Daten. Zum Steuern eines das erfindungsgemäße Verfahren implementierenden Computerprogramms ist in der Turbinensteuerung CTL insbesondere ein nichtflüchtiger Speicher vorgesehen.

Die Gasturbine GT verfügt über mehrere Brenner, von denen in Figur 4 aus Übersichtlichkeitsgründen nur zwei Brenner BN1 und BN2 dargestellt sind. Ein jeweiliger Brenner BN1 bzw. BN2 kann hierbei auch mehrere Brennstellen aufweisen und/oder als Brennergruppe ausgestaltet sein. Jeder Brenner BN1 bzw. BN2 wird durch ein elektrisches oder hydraulisches Mehrwegventil MV1 bzw. MV2 brennerindividuell gespeist. Die Mehrwegventile MV1 und MV2 teilen einen Brennstoffzufluss zu den Brennern BN1 und BN2 brennerspezifisch oder brennergruppenspezifisch auf die einzelnen Brennstoffstufen auf, wie bereits im Zusammenhang mit Figur 3 beschrieben.

Die Mehrwegventile MV1 und MV2 werden jeweils durch brennerspezifische Steuerdaten, hier SD1 bzw. SD2 angesteuert, durch die für jedes Mehrwegventil MV1 und MV2 die Aufteilung des Brennstoffzuflusses auf die verschiedenen Brennstoffstufen brennerspezifisch oder brennergruppenspezifisch eingestellt wird. Darüber hinaus können durch die Steuerdaten SD1 und SD2 auch ein Mischverhältnis zwischen Brennstoff und Luft, ein Einspritzdruck oder andere Steuerparameter brennerspezifisch oder brennergruppenspezifisch eingestellt werden.

An einen jeweiligen Brenner BN1 bzw. BN2 ist jeweils ein brennerspezifischer Sensor AS1 bzw. AS2 angeordnet, der jeweils brennerspezifische Verbrennungsmessdaten VD1 bzw. VD2 des betreffenden Brenners BN1 bzw. BN2 vorzugsweise in Echtzeit misst. Im vorliegenden Ausführungsbeispiel werden insbesondere von Druckschwankungen innerhalb einer jeweiligen Brennkammer erzeugte akustische Schwingungen eines jeweiligen Brenners BN1 bzw. BN2 gemessen. Dabei werden jeweils Intensitäten der akustischen Schwingungen in mehreren Frequenzbereichen, vorzugsweise zwischen 15 Hz und 10 kHz für jeden Brenner BN1 bzw. BN2 separat erfasst und als Verbrennungsmessdaten VD1 bzw. VD2 ausgegeben. Zusätzlich können durch die Sensoren AS1 und AS2 auch ein brennerspezifischer Schadstoffausstoß, insbesondere von Stickoxiden, Kohlenmonoxid oder unverbrannten Kohlenwasserstoffen, eine chemische Zusammensetzung der Schadstoffe, eine Verbrennungstemperatur oder Verbrennungstemperaturverteilung, eine Einlass- oder Abgastemperatur, ein Druck, ein Brennstoff-Luft-Mischungsverhältnis, ein Brennstoffzufluss oder andere Verbrennungsparameter als Verbrennungsmessdaten VD1 und VD2 erfasst werden.

Die von einem jeweiligen Sensor AS1 bzw. AS2 gemessenen und ausgegebenen Verbrennungsmessdaten VD1 bzw. VD2 werden jeweils einer den betreffenden Brenner BN1 bzw. BN2 identifizierenden Brennerkennung BK1 bzw. BK2 zugeordnet und zur Turbinensteuerung CTL übermittelt.

Weiterhin verfügt die Gasturbine GT über Performanzsensoren PS, die, vorzugsweise in Echtzeit, Performanzmessdaten PD der Gasturbine GT messen. Die Performanzsensoren PS können die Sensoren AS1 und AS2 ganz oder teilweise umfassen. Die Performanzmessdaten PD können brennerspezifisch oder brennerübergreifend gemessen werden und ggf. Teil der von den Sensoren AS1 und AS2 gemessenen Verbrennungsmessdaten VD1 und VD2 sein. Die Performanzmessdaten PD können insbesondere Messdaten über Leistung, Wirkungsgrad, Brennstoffverbrauch oder Verschleiß der Gasturbine GT, über Druckschwankungen in den Brennkammern, über Schadstoffemissionen, insbesondere von Stickoxiden, Kohlenmonoxid oder unverbrannten Kohlenwasserstoffen, über Einlasstemperaturen, über Abgastemperaturen, über lokale Temperaturspitzen oder über ein Zusetzen von Brennstoffdüsen sowie Messdaten über andere eine Performanz der Gasturbine GT betreffende Betriebsgrößen umfassen.

Die Verbrennungsmessdaten VD1 werden in Zuordnung zur Brennerkennung BK1 und die Verbrennungsmessdaten VD2 in Zuordnung zur Brennerkennung BK2 zu einem maschinellen Lernmodell NN der Turbinensteuerung CTL übermittelt. Die Performanzmessdaten PD werden von den Performanzsensoren PS ebenfalls zum maschinellen Lernmodell NN übermittelt. Die Performanzmessdaten PD werden zusammen mit den Verbrennungsmessdaten VD1 und VD2 in Zuordnung zu den Brennerkennungen BK1 und BK2 als Trainingsdaten verwendet, um das maschinelle Lernmodell NN datengetrieben zu trainieren.

Das maschinelle Lernmodell NN wird im vorliegenden Ausführungsbeispiel durch ein künstliches neuronales Netz implementiert. Das künstliche neuronale Netz wird vorzugsweise mittels eines Verfahrens des bestärkenden Lernens (Reinforcement-Learning) trainiert. Hierbei werden die Performanzmessdaten PD in einer Belohnungsfunktion ausgewertet, die anhand der Performanzmessdaten PD einen durch das Training zu optimierenden Performanzwert für die Gasturbine GT ermittelt. Eine solche Belohnungsfunktion wird häufig auch als Reward-Function bezeichnet. Zur Durchführung des Trainings ist eine Vielzahl von bekannten Verfahren des bestärkenden Lernens verfügbar. Vorzugsweise kann ein sogenanntes PGNRR-Verfahren (PGNRR: Policy Gradient Neural Rewards Regression), ein sogenanntes VOP-PGNRR-Verfahren (VOP-PGNRR: Variable Objective Policy PGNRR) oder ein modellbasiertes Reinforcement-Learning-Verfahren wie z.B. ein sogenanntes RCNN-Verfahren (RCNN: Recurrent Control Neural Network) zum Training verwendet werden.

Das maschinelle Lernmodell NN umfasst im vorliegenden Ausführungsbeispiel für jeden Brenner der Gasturbine GT, hier BN1 bzw. BN2, ein brennerspezifisches Teilmodell ML1 bzw. ML2, das mittels der Trainingsdaten PD sowie VD1, BK1 bzw. VD2, BK2 darauf trainiert wird, über den jeweiligen Brenner BN1 bzw. BN2 spezifische Steuerdaten, hier SD1 bzw. SD2 zu generieren. Die Teilmodelle ML1 und ML2 werden parallel trainiert und die trainierten Teilmodelle ML1 und ML2 in Produktivbetrieb der Gasturbine GT parallel ausgeführt. Durch die parallele Ausführung der Teilmodelle ML1 und ML2 kann die Anwendung des trainierten maschinellen Lernmodells NN stark beschleunigt werden, so dass bei der Generierung der Steuerdaten SD1 und SD2 eine hohe Zeitauflösung erzielt werden kann.

Als Training sei in diesem Zusammenhang - dem fachüblichen Sprachgebrauch folgend - eine Abbildung von Eingabedaten eines maschinellen Lernmodells, hier NN, auf eine oder mehrere Zielgrößen verstanden, die nach vorgegebenen Kriterien während einer Trainingsphase optimiert wird. Hierbei wird eine auf die vorgegebenen Kriterien hin optimierte Trainingsstruktur des maschinellen Lernmodells NN ausgebildet. Die Trainingsstruktur kann z.B. eine Vernetzungsstruktur von Neuronen eines neuronalen Netzes und/oder Gewichte von Verbindungen zwischen den Neuronen umfassen, die durch das Training so ausgebildet werden, dass die vorgegebenen Kriterien möglichst gut erfüllt werden. Die vorgegebenen Kriterien können in einer zu optimierenden Belohnungsfunktion abgebildet werden.

Im vorliegenden Ausführungsbeispiel empfängt das maschinelle Lernmodell NN von der Gasturbine GT die brennerspezifischen Verbrennungsmessdaten VD1 und VD2 jeweils in Zuordnung zur betreffenden Brennerkennung BK1 bzw. BK2 als Eingabedaten. Als weitere Eingabedaten empfängt das maschinelle Lernmodell NN die Performanzmessdaten PD. Die Ausgabedaten des maschinellen Lernmodells NN werden als brennerspezifische Steuerdaten SD1 und SD2 zur Gasturbine GT zurückgeführt. Mittels der Steuerdaten SD1 wird das Mehrwegventil MV1 und mittels der Steuerdaten SD2 wird das Mehrwegventil MV2 wie oben beschrieben angesteuert.

Das maschinelle Lernmodell NN wird darauf trainiert, dass seine Ausgabedaten, hier die brennerspezifischen Steuerdaten SD1 und SD2, bei brennerspezifischer Ansteuerung der Mehrwegventile MV1 und MV2 durch diese Steuerdaten SD1 und SD2 den Performanzwert und dadurch gewissermaßen die Performanzmessdaten PD optimieren. Die Nutzung der Performanzmessdaten PD als Optimierungskriterium für das maschinelle Lernmodell NN ist in Figur 4 durch einen strichlierten Pfeil veranschaulicht. Damit ist das Training auf ein Optimierungsproblem zurückgeführt, für das eine Vielzahl von Optimierungsverfahren verfügbar sind.

Durch die Optimierung des Performanzwertes wird das maschinelle Lernmodell NN darauf trainiert, aus den brennspezifischen Verbrennungsmessdaten VD1 und VD2 für den Betrieb der Gasturbine GT vorteilhafte, d.h. performanzerhöhende Steuerdaten SD1 und SD2 zu generieren. Mittels der brennerspezifisch optimierten Steuerdaten SD1 und SD2 kann in der Regel ein Wirkungsgrad der Gasturbine GT erhöht und/oder ein Schadstoffausstoß oder Verschleiß der Gasturbine GT verringert werden. Darüber hinaus können lokale Temperaturspitzen vermieden oder ein Zusetzen von Brennstoffdüsen verringert werden.

Das maschinelle Lernmodell NN wird vorzugsweise im laufenden Produktivbetrieb der Gasturbine GT anhand von aktuell erfassten Verbrennungsmessdaten und Performanzmessdaten weitertrainiert. Insbesondere kann ein geschlossener Regelkreis für eine fortlaufende Optimierung vorgesehen sein, um so die Gasturbine GT laufend an umgebungsbedingte oder laufzeitbedingte Veränderungen anzupassen.

Gemäß einer Ausführungsvariante der Erfindung können die Verbrennungsmessdaten VD1 und VD2 durch die Sensoren AS1 und AS2 auch brennstoffstufenspezifisch erfasst werden und ihnen eine die jeweilige Brennstoffstufe identifizierende Brennstoffstufenkennung zugeordnet werden. Die sowohl brennerspezifischen als auch brennstoffstufenspezifischen Verbrennungsmessdaten VD1 und VD2 können dann in Zuordnung zur jeweiligen Brennstoffstufenkennung als Eingabedaten zum maschinellen Lernmodell NN übermittelt werden, um dieses zu trainieren. Die zusätzliche Differenzierung nach Brennstoffstufen erlaubt es, auch brennstoffstufenspezifische Wirkungszusammenhänge zu modellieren und bei der Optimierung des Performanzwertes zu berücksichtigen.

Gemäß einer weiteren Ausführungsvariante der Erfindung kann ein weiteres maschinellen Lernmodells (nicht dargestellt) vorgesehen sein, dass darauf trainiert wird, weitere Steuerdaten zu generieren, durch die eine Brennstoffflussverteilung zwischen den Brennern BN1 und BN2 eingestellt wird und die den Performanzwert und/oder einen weiteren Performanzwert zusätzlich optimieren.

## Patentansprüche

1. Verfahren zum Steuern einer Verbrennungskraftmaschine (GT) mit mehreren Brennern (BN1, BN2), wobei
a) für einen jeweiligen Brenner (BN1, BN2) Verbrennungsmessdaten (VD1, VD2) brennerspezifisch erfasst und einer den jeweiligen Brenner (BN1, BN2) identifizierenden Brennerkennung (BK1, BK2) zugeordnet werden,
b) Performanzmessdaten (PD) der Verbrennungskraftmaschine (GT) erfasst werden, anhand derer ein Performanzwert ermittelt wird,
c) mittels der Verbrennungsmessdaten (VD1, VD2), der zugeordneten Brennerkennungen (BK1, BK2) sowie der Performanzmessdaten (PD) ein maschinelles Lernmodell (NN) darauf trainiert wird, brennerspezifische Steuerdaten (SD1, SD2) zu generieren, die bei brennerspezifischer Ansteuerung der Brenner (BN1, BN2) durch die Steuerdaten (SD1, SD2) den Performanzwert optimieren, und
d) vom trainierten maschinellen Lernmodell (NN) generierte Steuerdaten (SD1, SD2) zum brennerspezifischen Ansteuern der Brenner (BN1, BN2) ausgegeben werden.

2. Verfahren nach Anspruch 1, **dadurch gekennzeichnet, dass** ein Brennstoffzufluss zu einem jeweiligen Brenner (BN1, BN2) abhängig von den Steuerdaten (SD1, SD2) brennerspezifisch auf mehrere Brennstoffstufen (FSA, FSB) aufgeteilt wird.

3. Verfahren nach Anspruch 2, **dadurch gekennzeichnet,**
**dass** die Aufteilung des Brennstoffzuflusses auf die Brennstoffstufen (FSA, FSB) durch brennerspezifische Mehrwegventile (MV1, MV2) vorgenommen wird.

4. Verfahren nach einem der vorhergehenden Ansprüche, **dadurch gekennzeichnet, dass**
zur kurzfristigen Unterbrechung oder Reduzierung eines Brennstoffzuflusses ein brennerübergreifendes Ventil angesteuert wird.

5. Verfahren nach einem der vorhergehenden Ansprüche, **dadurch gekennzeichnet,**
**dass** Verbrennungsmessdaten brennstoffstufenspezifisch erfasst und jeweils einer Brennstoffstufenkennung zugeordnet werden, und
**dass** die zugeordneten Brennstoffstufenkennungen zum Trainieren des maschinellen Lernmodells (NN) verwendet werden.

6. Verfahren nach einem der vorhergehenden Ansprüche, **dadurch gekennzeichnet, dass**
das maschinelle Lernmodell (NN) durch ein Verfahren des bestärkenden Lernens trainiert wird.

7. Verfahren nach einem der vorhergehenden Ansprüche, **dadurch gekennzeichnet, dass**
das maschinelle Lernmodell (NN) ein künstliches neuronales Netz, ein rekurrentes neuronales Netz, ein faltendes neuronales Netz, ein bayessches neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfasst.

8. Verfahren nach einem der vorhergehenden Ansprüche, **dadurch gekennzeichnet, dass**
das maschinelle Lernmodell (NN) im laufenden Betrieb der Verbrennungskraftmaschine (GT) anhand aktuell erfasster Verbrennungsmessdaten (VD1, VD2) und Performanzmessdaten (PD) weitertrainiert wird.

9. Verfahren nach einem der vorhergehenden Ansprüche, **dadurch gekennzeichnet, dass**
das maschinelle Lernmodell (NN) in einer Kalibrierungsphase mittels einer Trainings-Verbrennungskraftmaschine und/oder mittels eines Simulationsmodells einer Verbrennungskraftmaschine vortrainiert wird.

10. Verfahren nach einem der vorhergehenden Ansprüche, **dadurch gekennzeichnet, dass**
das maschinelle Lernmodell (NN) mehrere, für einen jeweiligen Brenner (BN1, BN2) spezifische Teilmodelle (ML1, ML2) umfasst, die jeweils für den jeweiligen Brenner (BN1, BN2) spezifische Steuerdaten (SD1, SD2) generieren.

11. Verfahren nach Anspruch 10, **dadurch gekennzeichnet, dass** die Teilmodelle (ML1, ML2) zur Generierung der brennerspezifischen Steuerdaten (SD1, SD2) parallel ausgeführt werden.

12. Verfahren nach einem der vorhergehenden Ansprüche, **dadurch gekennzeichnet, dass**
ein weiteres maschinelles Lernmodell darauf trainiert wird, weitere Steuerdaten zu generieren, durch die eine Brennstoffflussverteilung zwischen den Brennern (BN1, BN2) und/oder eine Verbrennungstemperatur eingestellt wird und die den Performanzwert und/oder einen weiteren Performanzwert optimieren.

13. Anordnung zum Steuern einer Verbrennungskraftmaschine (GT) mit mehreren Brennern (BN1, BN2), eingerichtet zum Ausführen eines Verfahrens nach einem der vorhergehenden Ansprüche.

14. Computerprogrammprodukt zum Steuern einer Verbrennungskraftmaschine mit mehreren Brennern (BN1, BN2), eingerichtet zum Ausführen eines Verfahrens nach einem der Ansprüche 1 bis 12.

15. Computerlesbares Speichermedium mit einem Computerprogrammprodukt nach Anspruch 14.
